Europäisches Patentamt

(19) European Patent Office

Office européen des brevets

(11) Numéro de publication: **0 163 114**
**B1**

(12) **FASCICULE DE BREVET EUROPEEN**

(45) Date de publication du fascicule du brevet: **16.05.90**

(51) Int. Cl.⁵: **G 06 K 7/10**

(21) Numéro de dépôt: **85104891.8**

(22) Date de dépôt: **23.04.85**

(54) Tête de lecture de marques portées par un document.

(30) Priorité: **26.04.84 FR 8406588**

(43) Date de publication de la demande:
**04.12.85 Bulletin 85/49**

(45) Mention de la délivrance du brevet:
**16.05.90 Bulletin 90/20**

(84) Etats contractants désignés:
**DE FR GB NL**

(56) Documents cités:
EP-A-0 071 304
WO-A-80/02615
FR-A-2 127 066
FR-A-2 236 397
US-A-3 503 666
US-A-4 288 701

IBM TECHNICAL DISCLOSURE BULLETIN, vol.
16, no. 11, avril 1974, pages 3726-3727, New
York, US; G.M. HEILING et al.: "Document
detector and reader"

(73) Titulaire: **ALCATEL SATMAM**
**113 rue Jean-Marin Naudin**
**F-92220 Bagneux (FR)**

(72) Inventeur: **Dimur, Gérard**
**109 rue des Templiers**
**F-91360 Epinay Sur Orge (FR)**
Inventeur: **Vainpress, Frédéric**
**10 rue Corvisart**
**F-75013 Paris (FR)**

(74) Mandataire: **Weinmiller, Jürgen et al**
**Lennéstrasse 9 Postfach 24**
**D-8133 Feldafing (DE)**

(56) Documents cités:

IBM TECHNICAL DISCLOSURE BULLETIN, vol.
17, no. 6, novembre 1974, pages 1821-1822, New
York, US; P.F. HEIDRICH et al.: "Optical
waveguide links for high-resolution scanner
applications"

Courier Press, Leamington Spa, England.

## Description

La présente invention concerne la lecture de marques telles que notament bâtonnet de code ou caractères, portées par un document ou support mobile, en vue d'en assurer la reconnaissance avec un maximum de sécurité et en déduire les commandes correspondantes ou d'en assurer une détection pour la reconnaissance d'une qualité d'impression. Elle porte plus particulièrement sur un mode spécifique de réalisation de telles têtes de lecture, utilisées notamment dans des systèmes de traitement de courrier.

On connaît des dispositifs de lecture de marques basés sur le principe de détection optique de la présence d'une marque sur la surface d'un document et dont la propriété est de réfléchir une quantité de lumière inférieure à celle que réfléchirait cette même surface en l'absence de marque. On utilise généralement pour cela, disposés près de la surface du document, une source de lumière, par exemple une ampoule électrique, et un détecteur de lumière, par exemple une photodiode.

La photodiode effectue la mesure de la lumière réfléchie par la marque qu'elle transforme en courant électrique; ce courant électrique doit franchir un certain seuil pour être pris en compte et être significatif d'une marque détectée.

Cependant, les dispositifs antérieurs présentent de nombreux inconvénients. La source disposée près des documents dégage de la chaleur et risque de détériorer les documents. Le document est mobile et, par suite de ce déplacement pour son transport, on peut constater des variations de distance entre le document et la source et/ou le détecteur, qui se traduisent par des variations de la réponse électrique du détecteur. La détermination du seuil de prise en compte du signal électrique délivré par la photodiode, dit seuil de détection de marque, est alors imprécise. Les différences dans la teinte du fond du document ou les différences de qualité d'impression des marques se traduisent aussi par des variations de la réponse électrique du détecteur. Ces différentes conditions de lecture de marques peuvent conduire à des minimas de la réponse électrique de la photodiode pour lesquels le seuil de détection de marque n'est pas toujours atteint. L'opérateur doit alors, pour tenir compte des conditions de lecture, régler manuellement ce seuil, en agissant au jugé sur un potentiomètre de réglage correspondant, pour permettre une lecture de marques. Dans les conditions pratiques d'utilisation, la source de lumière peut aussi être sujette à des petites variations de l'intensité lumineuse émise, dépendant de la température ou de la tension d'alimentation.

Toutes ces causes déterminent un nombre important d'erreurs dans l'interprétation des informations lues sur les documents.

Pour éviter, autant que possible ces inconvénients, en particulier le réglage du seuil de détection précité, on connaît aussi des ensembles de lecture de marques utilisant deux photodétecteurs couplés à un amplificateur différentiel de sortie et comportant des moyens de traitement dans le temps du signal différentiel obtenu. L'ensemble de lecture de marques décrit dans la demande de brevet français n° 81 08886 publiée le 12 novembre 1982 sous le numéro FR—A—2 505 524 de la demanderesse retient ce principe de mesure différentielle pour la reconnaissance de marques.

En outre, il reporte, à distance des documents, la source de lumière et de préférence également les photodétecteurs, pour diminuer leurs incidences et ainsi minimiser d'autant les erreurs possibles et éviter d'éventuelles détériorations des documents. Il utilise à cet effet trois jeux de fibres optiques ayant des premières extrémités couplées pour l'un des jeux de fibres par des connecteurs optiques, à la source de lumière et, pour chacun des deux autres jeux, à l'un et l'autre des photodétecteurs respectivement et dont les secondes extrémités définissent une tête d'émission disposée entre deux têtes de réception, face au document. Les têtes de réception sont disposées relativement entre elles de manière qu'elles reçoivent simultanément la lumière réfléchie par deux zones parallèles du document, aussi proches que possible pour être équivalentes quant à la teinte du fond du document mais dont l'une seule porte la suite de marques à lire, l'autre zone ne portant pas de marque. Ces têtes seront assemblées sur un support portant à cet effet trois fentes parallèles de positionnement dans lesquelles elles sont montées.

Dans l'ensemble de lecture selon cette demande de brevet les deux photodétecteurs, ou photodiodes, ainsi que des amplificateurs individuels pour les signaux électriques issus des photodiodes et les connecteurs optiques assurant le couplage des jeux de fibres aux photodiodes sont montés sur une carte de mesure analogique. Les signaux électriques issus des photodiodes puis amplifiés sont transmis par câbles électriques à un dispositif de traitement, de type numérique.

La présente invention porte sur une tête de lecture retenant, comme dans la demande de brevet précitée, le principe d'une mesure différentielle pour la lecture de marques avec report, à distance des documents, de la source de lumière et des photodétecteurs. Elle a pour but essentiel de définir un produit compact et robuste, de coût abaissé, réglant les problèmes liés à une fabrication industrielle de l'ensemble précédent et à la fragilité qu'il présentait.

Ce but est atteint par la tête de lecture telle qu'elle est définie dans la revendication 1.

Selon un mode de réalisation de l'invention, le conduit optique rigide, reçu dans le logement central dit conduit émetteur, présente une extrémité de couplage avec la source de section circulaire et l'autre extrémité formant la tête émettrice de section rectangulaire dont la grande dimension est sensiblement égale au diamètre de la section de l'extrémité de couplage.

Selon un autre mode de réalisation de l'invention lesdits conduits optiques rigides reçus dans les logements latéraux dits conduits optiques récepteurs présentent une extrémité de couplage avec l'un des photodétecteurs de section carrée ou rectangulaire et l'autre extrémité formant ladite tête réceptrice de section rectangulaire dont l'un des côtés est de dimension réduite par rapport à celui correspondant de l'extrémité de couplage au photodétecteur.

Avantageusement, les sections de l'extrémité de couplage et de celle formant la tête réceptrice desdits conduits optiques récepteurs sont sensiblement égales. Ils sont aussi préformés en S incliné. Les conduits optiques précités sont en une matière plastique moulée, par exemple en polymétacrylate ou polycarbonate.

Selon un autre mode de réalisation de l'invention, ladite source de lumière est positionnée dans ladite partie avant et présente à son droit une fenêtre dans au moins l'une des grandes faces dudit boîtier.

De préférence ladite source de lumière est logée à l'intérieur d'un radiateur s'étendant sur la hauteur de ladite fenêtre, transversalement à ladite face avant du boîtier, et maintenu dans ladite découpe de l'arête centrale et dans un enbrèvement formé en regard dans les nervures délimitant entre elles ledit logement central, ledit radiateur prolongeant ledit logement central.

Selon un autre mode de réalisation ledit circuit de traitement analogique est maintenu bloqué dans ladite partie arrière par une butée sur la face arrière dudit boîtier et par pression desdits photodétecteurs sur les extrémités de couplage des conduits optiques récepteurs.

Ledit boîtier support sera avantageusement constitué de deux demi-boîtiers identiques, assemblables l'un à l'autre.

D'autres caractéristiques et les avantages de la présente invention ressortiront de la description détaillée d'un exemple de réalisation illustré dans le dessin ci-annexé. Dans ce dessin:

—la figure 1 est une vue en perspective de la tête de lecture de marques selon l'invention,

—la figure 2 est une vue de la face de lecture, dite face avant de cette tête,

—la figure 3 est une vue en élévation de l'un des deux demi-boîtiers support de cette tête,

—la figure 4 est une vue partielle agrandie de la face avant vue selon la flèche IV de la figure 3,

—les figures 5, 6 et 7 sont des coupes, respectivement selon la ligne V—V, la ligne brisée VI—VI et la ligne VII—VII de la figure 3,

—la figure 8 est une vue partielle en perspective de la partie avant du demi-boîtier support de la figure 3,

—la figure 9 montre en vue en élévation éclatée l'association des éléments rentrant dans la tête de lecture,

—les figures 10, 11 et 12 représentent respectivement vu de profil, en élévations et de dessous, l'un des conduits optiques latéraux, dits conduits récepteurs, de la tête de lecture,

—les figures 13, 14 et 15 représentent respectivement vue de profil, en élévation et de dessous, le conduit optique central dit conduit émetteur de la tête de lecture,

—la figure 16 est une vue en élévation de l'un des demi-boîtiers support sur lequel sont montés les éléments de la tête de lecture.

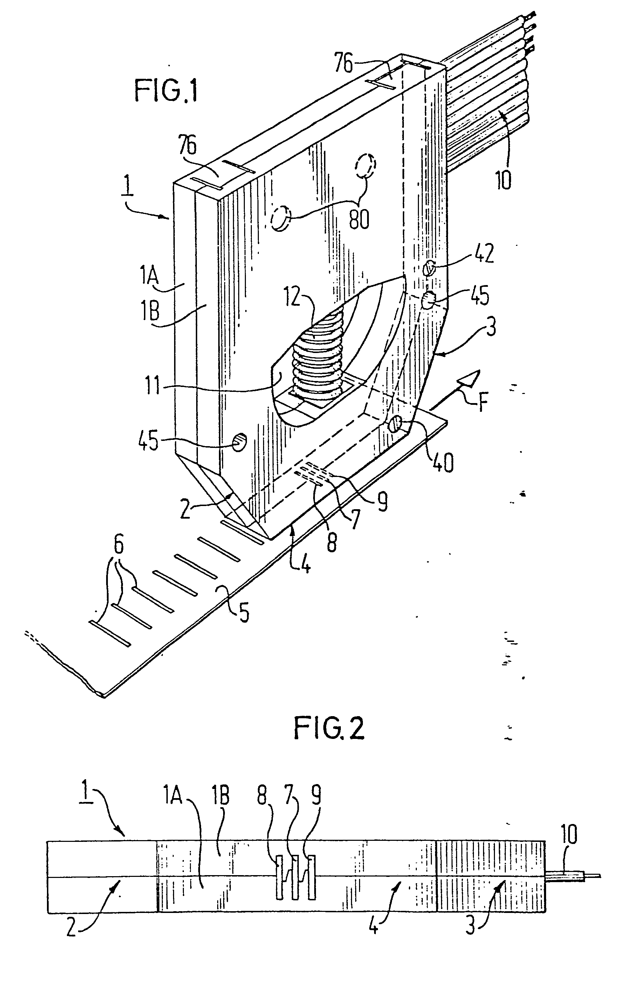

En regard de la figure 1, et/ou de la figure 2, on voit que la tête de lecture 1 selon l'invention se présente sous la forme d'un boîtier plat identifié sous la même référence 1 et constitué de deux demi-boîtiers identiques 1A et 1B assemblés. Il est d'une manière générale parallélépipédique et a deux de ses arêtes adjacentes tronquées par deux pans coupés latéraux 2 et 3. La petite face latérale 4 limitée par ces deux pans coupés constitue la face de lecture ou face avant de la tête, destinée à assurer la lecture de marques 6 portées par un document 5 défilant selon la flèche F devant elle. Ces marques 6, telles que bâtonnets disposés en une colonne ainsi que représenté ou en variante caractères inscrits par imprimante d'ordinateur traduisent différentes fonctions relatives à ce document et à son traitement, par exemple identification du document, constitution de liasses à nombre de feuillets variable avec ou non association à ces liasses de pièces annexes, affranchissement personnalisé d'enveloppes contenant ces liasses et/ou séparation des enveloppes contenant ces liasses (tri, rangement par codes postaux. . .). Leur lecture permet la reconnaissance de la fonction codée qu'elles représentent ou tout simplement une détection d'une qualité d'impression de l'imprimante, considérée satisfaisante.

En vue de cette lecture de marques, la tête 1 présente sur sa face avant 4 trois têtes individuelles de détection disposées côte à côte et parallèlement entre elles, l'une centrale 7 est émettrice de lumière, les deux autres de part et d'autre, ou latérales, 8 et 9 sont réceptrices de la lumière réfléchie par le document. La tête émettrice 7 et les deux têtes réceptrices 8 et 9 sont disposées transversalement à la face avant 4 et sensiblement en son centre; elles sont écartées relativement entre elles de manière que la tête émettrice 7 éclaire les deux zones du document en regard des deux têtes réceptrices et que lorsque l'une des deux têtes réceptrices 8 ou 9 se trouve au droit d'une marque simultanément l'autre tête réceptrice soit au droit d'une zone exempte de marque, et vice-et-versa.

On voit, en outre, que cette tête de lecture est équipée latéralement d'un câble plat, à cinq paires de conducteurs, 10, pour la sortie des signaux de lecture de la tête 1 et pour les alimentations nécessaires des circuits qu'elle comporte.

Elle présente aussi une fenêtre 11 dans toute son épaisseur, occupant sensiblement le quart de sa hauteur et de forme sensiblement semi-circulaire, située du côté de sa face avant 4 mais distante de celle-ci. Cette fenêtre est traversée par un radiateur 12, qui lui est intérieur, ce radiateur étant transversal à la face avant 4.

Ces deux demi-boîtiers 1A et 1B sont de préférence réalisés en matière plastique et issus de moulage.

La description des demi-boîtiers, qui sont identi-

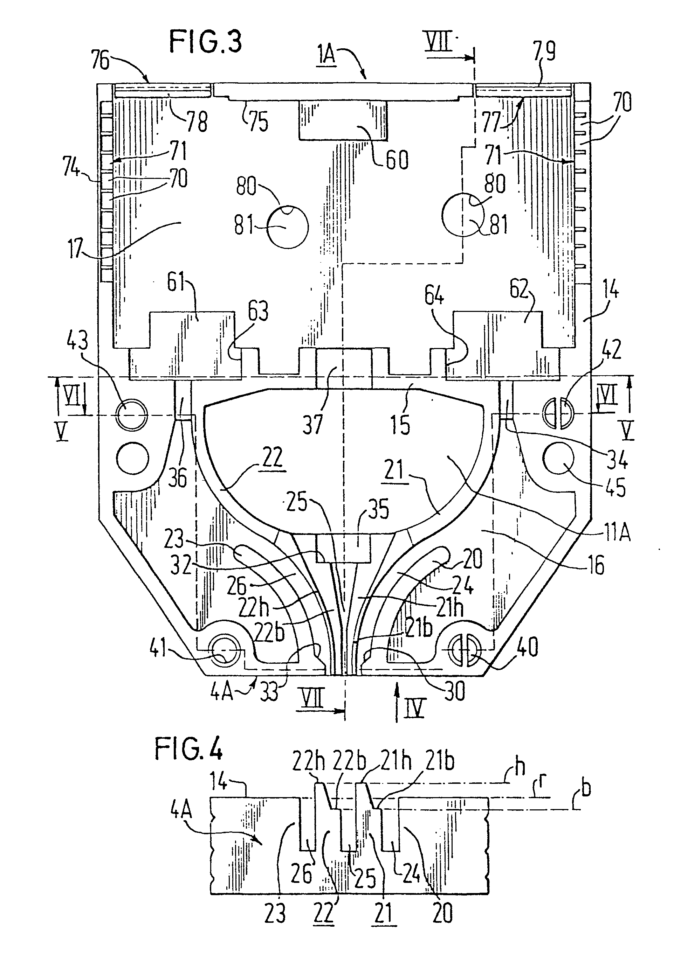

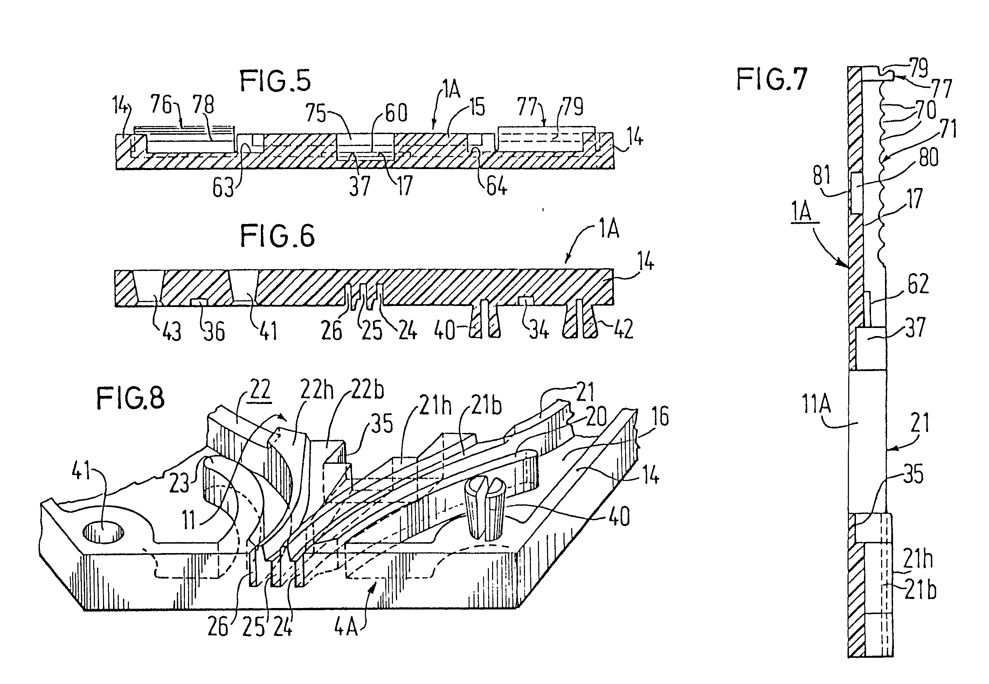

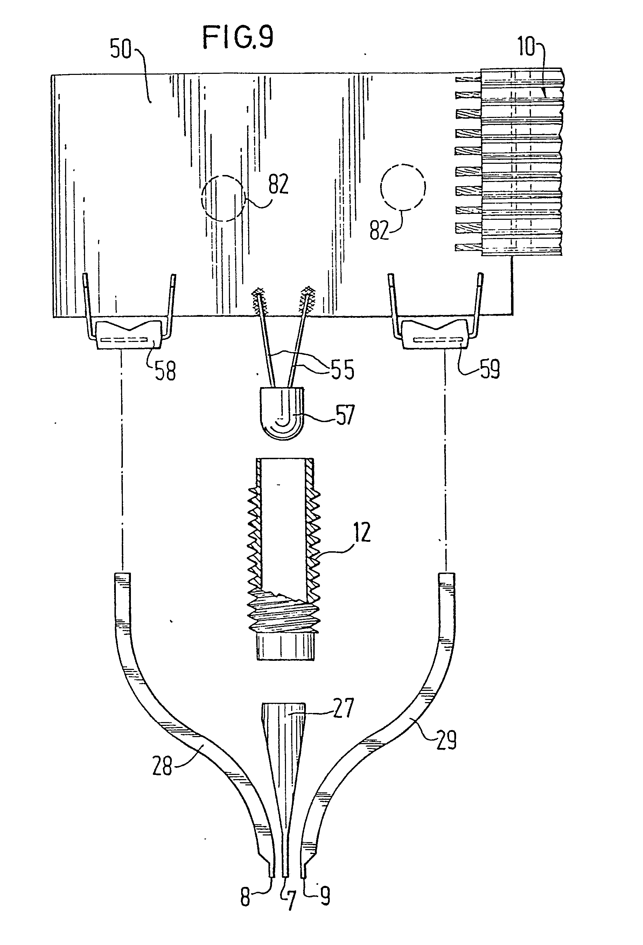

ques l'un à l'autre, est faite en regard des figures 3 à 8 illustrant le demi-boîtier 1A, l'équipement de ces demi-boîtiers illustré dans la figure 9 est précisé au cours de la description de ce demi-boîtier.

Le demi-boîtier 1A présente, côté intérieur, un rebord périphérique 14. Une arête sensiblement centrale 15 et parallèle à sa face avant, le divise en deux parties l'une avant 16 incluant ladite face avant et l'autre arrière 17 incluant sa face arrière. Les parties de ce boîtier déjà citées au cours de la description des figures 1 et 2 sont désignées sous les mêmes références affectées de la lettre A.

Dans la partie avant 16 de ce demi-boîtier, un jeu de quatre nervures 20, 21, 22 et 23 délimitent entre elles, tout au moins partiellement, trois rainures ou logements 24, 25 et 26 pour trois conduits optiques rigides préformés 27, 28 et 29 l'un central émetteur et les deux autres récepteurs qui l'équipent essentiellement. Ces logements aboutissent dans la zone centrale de la face avant 4A. Ils y définiront avec les logements correspondants sur la face avant de l'autre demi-boîtier, trois fentes parallèles, transversales à ces faces avant, pour le positionnement relatif et le maintien de la tête centrale émettrice de lumière 7 et des deux têtes réceptrices de lumière 8 et 9 que constituent les premières extrémités des conduits optiques.

Le rebord périphérique 14 et l'arête centrale 15 sont sensiblement de hauteur moitié de celle de l'équipement que recevra la boîtier résultant et notamment de l'une des dimensions transversales des conduits optiques.

Dans le jeu de nervures précité, les deux nervures d'extrémité 20 et 23 ont une forme arquée et s'écartent l'une de l'autre depuis la face avant 4A. Un épanouissement en biais 30 ou 33, selon ces nervures 20 et 23 sur leur bord vertical en regard de la nervure adjacente et à proximité de la face avant 4A, permet de limiter la largeur de la fente dans la face avant par rapport à celle du logement correspondant.

Ces deux nervures 20 et 23 sont interrompues sur la moitié de la partie 16, sensiblement sur toute la hauteur de la fenêtre 11A du demi-boîtier. Cette non continuité les nervures 20 et 23 permet une déformation possible des conduits optiques 28 et 29. A l'opposé de la face avant 4A, l'extrémité de chacun des deux logements 24 et 26 est défini par une rainure 34 ou 36, selon le logement considéré, délimitée par le bord vertical de la nervure 21 ou 22 et le bord vertical du rebord périphérique 14 de largeur alors renforcée. Ces deux nervures 20 et 23 sont par ailleurs de même niveau que le rebord périphérique 14.

Les deux nervures médianes 21 et 22, de ce jeu de nervures 20—23, courent sur toute la partie 16. Elles s'écartent également l'une de l'autre depuis la face avant 4A et viennent en partie border la fenêtre 11A le long de laquelle elles sont au niveau du rebord périphérique 14. Entre cette fenêtre 11A et la face avant, elles délimitent entre elles le logement central 25 pour le conduit optique central émetteur 27. Dans cette zone, elles sont de largeur variable pour adapter la largeur du logement 25 à celle du conduit 27, qui sera décrit ci-après, et limiter la fente terminale du logement, qui reçoit la tête émettrice terminale 7 du conduit 27. En outre, dans cette même zone, elles sont, par rapport au rebord périphérique 14, de niveau légèrement supérieur du côté du logement central 25 et de niveau légèrement supérieur du côté du logement latéral 24 ou 26, pour l'une de ces nervures et inversement pour l'autre. Pour plus de précision, dans les figures 3 et 4 on a repéré pour chacune de ces nervures 21 et 22, leurs portions ayant des niveaux différents par la référence de la nervure accompagnée de la lettre h ou b, traduisant un niveau haut, pour la lettre h, et un niveau bas, pour la lettre b, par rapport à celui du rebord périphérique 14 ou des nervures latérales 20 et 23, considéré de référence. Dans la figure 4, on a indiqué ce niveau considéré de référence par la lettre r et les niveaux haut et bas précités par les lettres h et b. Ces différences de niveau facilitent un bon positionnement des conduits optiques dans leurs logements de l'un des demi-boîtiers et permettent lors de l'assemblage des deux demi-boîtiers, un positionnement relatif très précis de ces deux demi-boîtiers avec un bon maintien des éléments qui les équipent intérieurement.

Du côté de la fenêtre 11A, ces mêmes nervures 21 et 22 présentent en outre, sur leur bord en regard, un décrochement 31 ou 32, selon la nervure considérée, pour définir un embrèvement 35 recevant une extrémité du radiateur 12 pour son positionnement et son maintien entre les deux demi-boîtiers assemblés. Face à cet embrèvement, une découpe correspondante 37 dans l'arête centrale 15 permet de manière identique de recevoir l'autre extrémité du radiateur 12 qui s'étendra ainsi sur la hauteur de la fenêtre 11A. Ce radiateur 12 recevra intérieurement une lampe électrique 57 et la partie terminale du conduit optique 27, opposé à la tête émettrice 7, pour leur couplage.

Dans cette partie avant, un téton cylindrique fendu axialement 40 et un trou cylindrique correspondant 41, à l'une et l'autre des extrémités d'épaisseur renforcée de la portion du rebord 14 définissant la face avant 4A, et un autre téton analogue 42 et un trou cylindrique 43 positionné également sur des portions latérales du rebord 14 alors d'épaisseur renforcée, au voisinage de l'arête médiane 15, permettront l'assemblage des deux demi-boîtiers. Deux trous supplémentaires tels que 45 permettront l'assemblage de plusieurs têtes de lecture de marques sur plusieurs colonnes.

Dans la partie arrière 17, la portion correspondante du rebord 14 délimite avec l'arête médiane 15 l'emplacement d'une carte 50 de traitement analogique. Cette carte 50 portera un circuit hybride qui sera relié au câble plat 10 précité.

A cet effet, la partie arrière du demi-boîtier 1A présente sur son fond trois petites surfaces d'appui 60, 61, 62 en léger relief pour la carte. Ces surfaces d'appui sont selon une disposition relative triangulaire, l'une est sensiblement au niveau de la face arrière du demi-boîtier définie par le rebord 14, les deux autres sont à proximité de l'arête centrale 15 et également au voisinage du rebord 14 définissant les faces latérales du demi-boîtier. Il présente aussi deux cavités 63 et 64 formées dans l'arête centrale 15, ouvertes toutes deux vers la partie 17 et dans lesquelles ont été formées les deux surfaces d'appui 61, 62. Les deux rainures 34 et 36 recevant les parties terminales des conduits optiques 24 et 26, opposées à celles dites têtes réceptrices, débouchent dans les cavités 63 et 64. Ces cavités 63 et 64 constituent les logements de deux photodétecteurs 58 et 59 qui seront montés sur le bord de la carte 50 et seront raccordés au circuit qu'il porte. La source de lumière 57, également reliée à la carte 50 à partir de laquelle elle est alimentée, est disposée du même côté de la carte que les photodétecteurs; ses liaisons rigides telles que 55 sur le circuit que porte la carte assurent son maintien à distance de la carte et des photodétecteurs pour sont logement à l'intérieur du radiateur 12 au niveau sensiblement du centre de la fenêtre 11A. Ces liaisons 55 viennent au niveau de la découpe 37 précitée traverser l'arête centrale 15.

De chaque côté de cette partie arrière 17, le rebord 14 est partiellement dentelé sur la plus grande partie de son épaisseur pour définir les logements individuels tels que 70 pour les conducteurs du câble 10. Cette partie dentelée 71 est de niveau légèrement inférieur à celui du rebord 14, elle est bordée extérieurement par la fine épaisseur, identifiée sous la référence 74, restante du rebord 14, cette épaisseur restante étant sectionnée ou cassée d'un seul côté pour le libre passage du câble 10 tandis que de l'autre il assure la fermeture du boîtier résultant de l'assemblage des deux demi-boîtiers.

Le rebord 14, au niveau de la face arrière présente une partie centrale en surépaisseur vers l'intérieur de cette partie 17, formant une butée arrière 75 pour le bord correspondant de la carte 50. De chaque côté de cette butée arrière, deux paires de fentes définissent sur le rebord 14 deux languettes d'encliquetage 76 et 77 pour l'assemblage des deux demi-boîtiers. Chacune de ces languettes vient en léger relief au-dessus des autres parties du rebord 14, cette partie en relief forme une patte terminale d'accrochage 78 ou 79, issue d'une diminution d'épaisseur du rebord 14 sous elle, l'une des pattes 78 étant tournée vers l'intérieur de la partie 17 et l'autre 79 vers l'extérieur.

En outre sur la partie arrière 17 du boîtier 1A, on prévoit deux empreintes circulaires telles que 80, non crevées laissant un fond de fine épaisseur 81 que l'on peut aisément casser. Ces empreintes 80 sont positionnées en correspondance avec les emplacements, figurés en pointillés et identifiés sous la référence 82, de potentiomètres apparentant au circuit de traitement porté par la carte 50, qui permettent le réglage du niveau des signaux électriques issus de l'un et l'autre des photodétecteurs.

En regard de la figure 1, on note que ces empreintes 81 sont crevées pour le libre accès aux potentiomètres pour le réglage de niveau de ces signaux. On voit également les languettes d'encliquetage arrière 76 appartenant à l'un et l'autre des deux demi-boîtiers 1A et 1B, les tétons 42 et 40 du demi-boîtier 1A engagés dans les trous correspondants (tels que 43 et 41) du demi-boîtier 1B assurant notamment leur assemblage. On a en outre repéré les trous tels que 45 traversant la tête 1 et permettant le cas échéant un assemblage de plusieurs têtes analogues.

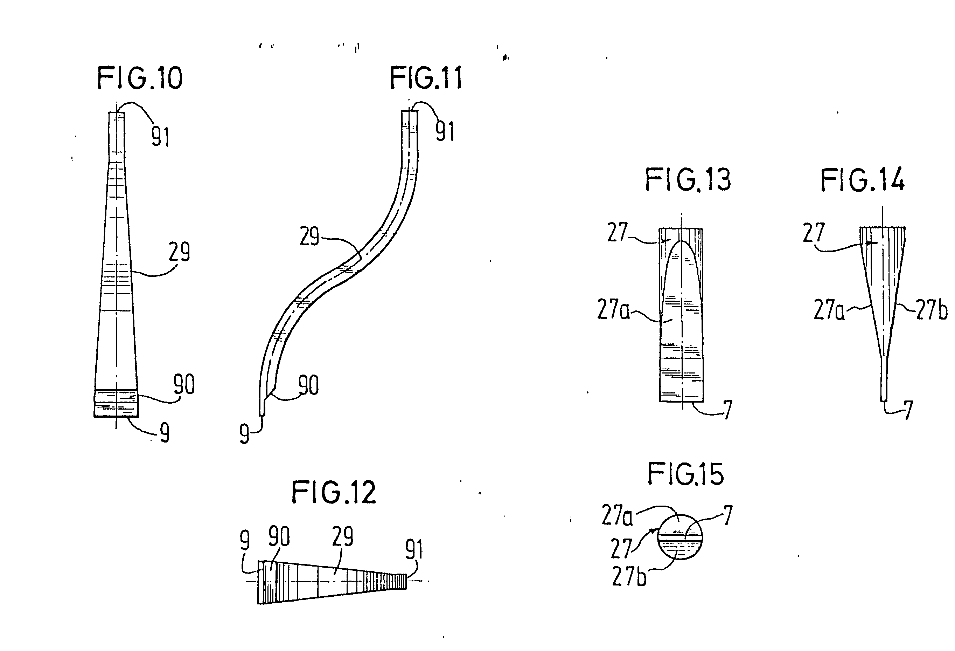

Les conduits optiques équipant la partie avant de la tête sont décrits en regard des figures 10 à 12 en ce qui concerne les conduits récepteurs de lumière, tels que le conduit 29, et les figures 13 à 15 en ce qui concerne le conduit optique émetteur central 27.

Les deux conduits optiques récepteurs sont identiques l'un à l'autre. En regard des figures illustrant le conduit récepteur 29, on voit que celui-ci a la forme générale d'un S incliné, ce S étant vu retourné dans la représentation donnée dans la figure 11.

Ce conduit optique 29 est d'épaisseur constante sensiblement sur toute sa longueur, exception faite de sa partie terminale définissant la tête réceptrice 9 dont l'épaisseur est réduite, dans un rapport trois sensiblement par la présence d'un pan incliné 90 attenant. La section de la tête réceptrice 9 est rendue sensiblement égale à celle de son autre extrémité 91 de couplage avec l'un des photodétecteurs, en lui donnant une hauteur variable entre ses extrémités (figure 10). Pour un bon centrage de cette dernière extrémité 91 sur la partie sensible du photodétecteur, sa section est de forme rectangulaire et de préférence, carrée.

En regard des figures 13 à 15, le conduit optique émetteur 27 se présente sous la forme générale d'un bâtonnet plus court que les conduits optiques récepteurs, dont l'extrémité constituant la tête émettrice 7 est de section rectangulaire, et l'autre de couplage avec la source de lumière est de section circulaire. La portion intermédiaire entre ses parties terminales est d'épaisseur régulièrement variable et présente à cet effet deux pans latéraux 27a, 27b, opposés l'un à l'autre, inclinés symétriquement sur son plan longitudinal médian lui conférant une section longitudinale de forme conique adaptant les sections terminales et canalisant les rayons lumineux captés par son extrémité de couplage vers la tête émettrice 7.

Ces conduits optiques émetteur 27 et récepteur tels que 29 sont réalisés en matière plastique et issus de moulage.

Ils seront avantageusement en polymétacrylate ou polycarbonate. On précise à titre d'exemple que les conduits optiques récepteurs ont une tête réceptrice de section de 3×0,35 mm et l'extrémité opposée de section 1,1×1,1 mm, le conduit optique émetteur a une tête émettrice de section 3×0,35 mm et l'extrémité opposée de diamètre 3 mm.

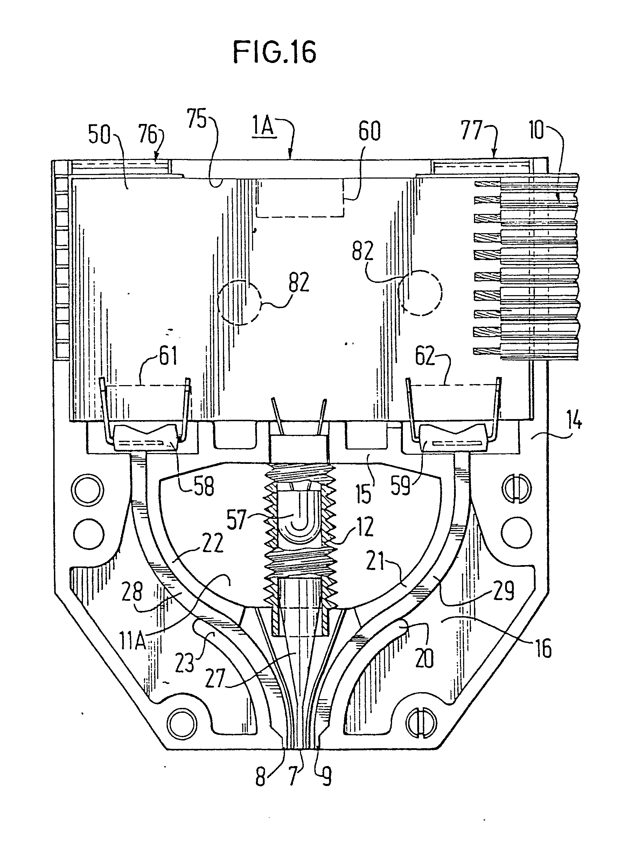

Dans la figure 16, on a illustré le montage des éléments équipant la tête sur le demi-boîtier 1A. En regard de cette figure on voit plus particulièrement que la source lumineuse 57 est logée dans le radiateur 12, sensiblement au niveau du centre de la fenêtre 11A et que ce radiateur servant de support à la source sert également de support au conduit optique émetteur 27 dont l'extrémité correspondante est légèrement distante de la lampe. Cette figure 16 montre aussi le montage de la carte 50 dans son logement et le maintien de celle-ci par appui de l'un de ses bords contre la butée arrière 75 et pression des faces des photodétecteurs 58 et 59, montés sur son bord opposé sur les extrémités de couplage des conduits optiques récepteurs 28 et 29.

La pression résultante sur les conduits optiques 28 et 29 est alors compensée par une déformation possible de ceux-ci dans la zone exempte de nervures extérieures telles que 20 ou 23 qui limitait leur logement.

Cette figure 16 met également en évidence les avantages de la tête de lecture selon l'invention. Ainsi, outre la mesure différentielle retenue, pour la détection et le cas échéant la reconnaissance de marques, et le report à distance du document de la source de lumière du fait du positionnement de la source à distance de la carte de traitement et des photodétecteurs, de son isolement de ceux-ci obtenu par les nervures et l'arête médiane et son montage dans un radiateur sensiblement au centre d'une fenêtre permettant une circulation d'air balayant le radiateur, l'influence de la chaleur dégagée par la source est minimisée au maximun, du fait aussi de l'isolement de la source de lumière, il n'y a plus de lumière parasite émise par la source et captée par les conduits optiques ou les photodétecteurs.

Ces avantages sont dûs aussi à la forme en S donnée aux conduits optiques récepteurs 28 et 29 qui permet leur éloignement de la source et définit l'implantation des photodétecteurs sur le bord de la carte 50. Le choix de ces conduits rigides mais élastiquement déformables permet de garantir leur maintien ferme dans la tête et d'utiliser ces conduits pour obtenir le bon maintien de la carte 50.

Les dimensions de ces conduits, en particulier, de leur section d'entrée de lumière par rapport à celle de sortie, assurent pour le conduit optique émetteur une récupération maximale de la lumière par la source et un centrage précis de cette lumière par rapport aux deux zones très proches à analyser et, pour chacun des conduits optiques récepteurs, une récupération précise de la lumière réfléchie par la zone de document directement en regard avec une large distribution de cette lumière réfléchie directement sur la surface sensible du photodétecteur correspondant avec lequel il est en contact.

L'agencement relatif des éléments rentrant dans la tête et leur montage ainsi que les choix effectués en regard des conduits optiques utilisés conduisent, en définitive à une tête finale de lecture aisée à réaliser, compacte et très robuste, et de faibles dimensions.

La présente invention a été décrite en regard d'un exemple de réalisation donné dans les dessins. Il est évident que l'on pourra y apporter des modifications de détail et/ou remplacer certains moyens par d'autres moyens équivalents sans pour autant sortie du cadre de cette invention telle qu'elle revendignée.

**Revendications**

1. Tête de lecture de marques sur un document, comportant une source de lumière (57) et deux photodétecteurs (58, 59), distants du document et couplés à trois conduits de lumière (27, 28, 29) définissant dans une surface de détection (4) située près du document un ensemble de trois têtes individuelles (7, 8, 9) terminales disposées côte à côte et parallèlement entre elles dans des fentes individuelles étroites de ladite surface, l'une émettrice (7) encadrée par les deux autres réceptrices (8, 9), et comportant, en outre, une carte de circuit (50) de traitement analogique des signaux électriques issus des photodétecteurs, caractérisée par le fait que la source (57), les photodétecteurs (58, 59), les trois conduits de lumière (27, 28, 29) et le circuit de traitement analogique (50) sont rassemblés et positionnés relativement entre eux dans un même boîtier support plat (1) divisé intérieurement, par une arête (15) sensiblement centrale et parallèle à deux de ses petites faces opposées, dites face avant (4), formant ladite surface de détection, et face arrière, en une partie avant (16) et une partie arrière (17), et par le fait que ladite partie avant (16) porte les trois conduits de lumière constitués par trois conduits optiques rigides préformés (27, 28, 29) maintenus positionnés individuellement par des jeux de nervures (20, 23) définissant entre elles un logement médian (25) et deux logements latéraux (24, 26) arqués s'écartant l'un de l'autre depuis sensiblement ladite face avant, pour les conduits respectifs, avec lesdites fentes parallèles sur ladite face avant, transversalement et sensiblement en son centre, et que ladite partie arrière (17) porte ladite carte de circuit de traitement analogique (50) portant ellemême, d'une part, lesdits photodétecteurs (58, 59) montés sensiblement contre son bord faisant face à ladite arête centrale et positionnés dans des cavités (61, 62) de ladite arête centrale (15) dans lesquelles débouchent lesdits logements latéraux (24, 26), respectivement, et, d'autre part, ladite source (57) disposée distante de ce même bord de la carte et tout au moins raccordée au circuit à travers une découpe (37) dans ladite arête centrale.

2. Tête de lecture selon la revendication 1, caractérisée par le fait que le conduit optique rigide (27) reçu dans le logement central (25), dit conduit émetteur, présente une extrémité de couplage avec la source de section circulaire et l'autre extrémité formant la tête émettrice (7) de section rectangulaire dont la grande dimension est sensiblement égale au diamètre de la section de l'extrémité de couplage.

3. Tête de lecture selon la revendication 2, caractérisée par le fait que ledit conduit émetteur présente une portion intermédiaire d'épaisseur régulièrement variable limitée par deux pans opposés (27a, 27b) inclinés symétriquement sur son plan longitudinal médian.

4. Tête de lecture selon l'une des revendications 1 à 3, caractérisée par le fait que lesdits conduits optiques rigides (28, 29) reçus dans les logements latéraux (26, 24) dits conduits optiques récepteurs présentent une extrémité de couplage avec l'un des photodétecteurs de section carrée ou rectangulaire et l'autre extrémité formant ladite tête réceptrice (8, 9) de section rectangulaire dont l'un des côtés est de dimension réduite par rapport à celui correspondant de l'extrémité de couplage au photodétecteur.

5. Tête de lecture selon la revendication 4, caractérisée par le fait que les sections de l'extrémité de couplage et de celle formant la tête réceptrice desdits conduits optiques récepteurs (28, 29) sont sensiblement égales.

6. Tête de lecture selon la revendication 5, caractérisée par le fait que lesdits conduits optiques récepteurs (28, 29) sont d'épaisseur sensiblement constante sur toute leur longueur, à l'exception de l'extrémité formant la tête réceptrice limitée par un pan incliné latéral (90), et de hauteur croissante régulièrement depuis l'extrémité de couplage à l'extrémité formant la tête réceptrice.

7. Tête de lecture selon l'une des revendications 4 à 6, caractérisée par le fait que chacun desdits conduits optiques récepteurs (28, 29) a son extrémité de couplage en contact direct avec la surface sensible de son photodétecteur (58, 59).

8. Tête de lecture selon l'une des revendications 1 à 7, caractérisée par le fait que lesdits conduits optiques récepteurs (28, 29) sont préformés en forme de S incliné.

9. Tête de lecture selon l'une des revendications 1 à 8, caractérisée par le fait que ladite source de lumière (57) est positionnée dans ladite partie avant (16) et présente à son droit une fenêtre (11) dans au moins l'une des grandes faces dudit boîtier (1).

10. Tête de lecture selon la revendication 9, caractérisée par le fait que ladite source de lumière (57) est logée à l'intérieur d'un radiateur (12) s'étendant sur la hauteur de ladite fenêtre (11), transversalement à ladite face avant (4) du boîtier (1), et maintenu dans ladite découpe (37) de l'arête centrale (15) et dans un embrèvement (35) formé en regard dans les nervures (21, 22) délimitant entre elles ledit logement central (25), ledit radiateur prolongeant ledit logement central.

11. Tête de lecture selon l'une des revendications 9 et 10, caractérisée par le fait que les deux nervures (21, 22) délimitant entre elles ledit logement central (25) sont, entre ladite fenêtre (11) et la face avant (4) du boîtier, en ce qui concerne l'une d'elles (21) de niveau haut (21h) du côté du logement central (25) et de niveau bas (21b) du côté du logement latéral (26) par rapport au niveau des nervures latérales (20, 23) et inversement en ce qui concerne l'autre.

12. Tête de lecture selon l'une des revendications 9 à 11, caractérisée par le fait que ladite fenêtre est au moins partiellement bordée par lesdites nervures centrales (21, 22).

13. Tête de lecture selon l'une des revendications 9 à 12, caractérisée par le fait que lesdites nervures latérales (20, 23) sont interrompues sensiblement sur la hauteur de la fenêtre (11).

14. Tête de lecture selon l'une des revendications 1 à 13, caractérisée par le fait que ledit circuit de traitement analogique (50) est maintenu bloqué dans ladite partie arrière par une butée (75) sur la face arrière dudit boîtier (1) et par pression desdits photodétecteurs (58, 59) sur les extrémités de couplage des conduits optiques récepteurs (28, 29).

15. Tête de lecture selon l'une des revendications 1 à 14, caractérisée par le fait que ledit boîtier support est constitué de deux demi-boîtiers identiques assemblables sur leur bord périphérique.

**Patentansprüche**

1. Lesekopf für Markierungen auf einem Dokument, mit einer Lichtquelle (57) und zwei Photodetektoren (58, 59) im Abstand zum Dokument und an drei Lichtleiter (27, 28, 29) angeschlossen, welche in einer in der Nähe des Dokumentes angeordneten Erfassungsebene (4) eine Gruppe von drei einzelnen Endköpfen (7, 8, 9) definieren, die nebeneinander und parallel zueinander in engen Einzelschlitzen der Oberfläche angeordnet sind, wobei einer, der Sendekopf (7), von den beiden anderen, den Empfangsköpfen (8, 9), umrahmt wird, und mit einer Schaltungskarte (50) zur Analogverarbeitung der von den Photodetektoren gelieferten elektrischen Signale, dadurch gekennzeichnet, daß die Lichtquelle (57), die Photodetektoren (58, 59), die drei Lichtleiter (27, 28, 29) und die Analogverarbeitungsschaltung (50) im selben flachen Gehäuse (1) relativ zueinander angeordnet und zusammengefaßt sind, das innen durch eine Rippe (15), die im wesentlichen zentral und parallel zu seinen einander gegenüberliegenden kleinen Seiten verläuft, nämlich der Vorderseite (4), die die Erfassungsoberfläche bildet, und der Rückseite, einen Vorderabschnitt (16) und einen Hinterabschnitt (17) unterteilt ist, und daß der Vorderabschnitt (16) die drei aus drei vorgeformten starren optischen Leitern (27, 28, 29) bestehenden Lichtleiter trägt, welche einzeln durch Rippensätze (20, 23) an ihren Plätzen gehalten werden, die untereinander eine mittlere Aufnahmekammer (25) und zwei bogenförmige seitliche Aufnahmekammern (24, 25) für die jeweiligen Lichtleiter definieren und sich im wesentlichen von der mit den parallelen, querlaufenden und im wesentlichen in ihrer Mitte angeordneten Schlitzen ausgestatteten Vorderfläche ausgehend voneinander entfernen, und daß der Hinterabschnitt (17) die Schaltungskarte (50) für die Analogverarbeitung hält, welche ihrerseits zum einen die Photodetektoren (58, 59), die im wesentlichen auf ihrer zur zentralen Rippe weisenden Kante montiert und in Hohlräumen (61, 62) dieser zentralen Rippe (15) positioniert sind, in welche jeweils die seitlichen Aufnahmekammern (24, 26) einmünden, und zum anderen die Lichtquelle (57) trägt, welche mit Abstand von derselben Kante der Karte angeordnet und mehr oder weniger durch einen Ausschnitt (37) in der zentralen Rippe mit der Schaltung verbunden ist.

2. Lesekopf nach Anspruch 1, dadurch gekennzeichnet, daß der in der mittleren Aufnahmekammer (25) untergebrachte starre optische Leiter (27), Sendeleiter genannt, ein Kupplungsende mit kreisförmigem Querschnitt zum Ankuppeln der Lichtquelle besitzt, während das andere Ende den Sendekopf (7) mit rechteckigem Querschnitt bildet, dessen große Abmessung im wesentlichen dem Durchmesser des Querschnitts des Kupplungsendes entspricht.

3. Lesekopf nach Anspruch 2, dadurch gekennzeichnet, daß der Sendelichtleiter einen Zwischenabschnitt regelmäßig veränderlicher Dicke besitzt, der durch zwei einander gegenüberstehende Schrägflächen (27a, 27b) begrenzt ist, die symmetrisch zu seiner längsgerichteten Mittelebene geneigt sind.

4. Lesekopf nach einem der Ansprüche 1 bis 3, dadurch gekennzeichnet, daß die in den seitlichen Aufnahmekammern (26, 24) untergebrachten starren Lichtleiter (28, 29), Empfangslichtleiter genannt, ein Kupplungsende für einen der Photodetektoren mit quadratischem oder rechteckigem Querschnitt besitzen, während das andere Ende den Empfangskopf (8, 9) mit rechteckigem Querschnitt bildet, dessen eine Seite kleiner bemessen ist als die entsprechende Seite des Kupplungsendes für den Photodetektor.

5. Lesekopf nach Anspruch 4, dadurch gekennzeichnet, daß die Querschnitte des Kupplungsendes und des den Empfangskopf der Empfangslichtleiter (28, 29) bildenden Endes im wesentlichen einander gleich sind.

6. Lesekopf nach Anspruch 5, dadurch gekennzeichnet, daß die Empfangslichtleiter (28, 29) über ihre gesamte Länge eine im wesentlichen konstante Dicke besitzen, mit Ausnahme des Endes, das den durch eine seitliche geneigte Fläche (90) begrenzten Empfangskopf bildet, und daß die Höhe dieser Lichtleiter regelmäßig vom Kupplungsende zum Empfangskopfende zunimmt.

7. Lesekopf nach einem der Ansprüche 4 bis 6, dadurch gekennzeichnet, daß jeder der Empfangslichtleiter (28, 29) mit seinem Kupplungsende in direktem Kontakt mit der lichtempfindlichen Oberfläche seines Photodetektors (58, 59) steht.

8. Lesekopf nach einem der Ansprüche 1 bis 7, dadurch gekennzeichnet, daß die Empfangslichtleiter (28, 29) in Gestalt eines geneigten S vorgeformt sind.

9. Lesekopf nach einem der Ansprüche 1 bis 8, dadurch gekennzeichnet, daß die Lichtquelle (57) im Vorderabschnitt (16) plaziert ist und ihr gegenüberliegend in mindestens einer der großen Flächen des Gehäuses (1) ein Fenster (11) besitzt.

10. Lesekopf nach Anspruch 9, dadurch gekennzeichnet, daß die Lichtquelle im Inneren eines Strahlers (12) untergebracht ist, der sich über die Höhe des Fensters (11) quer zur Vorderseite (4) des Gehäuses (1) erstreckt und in den Ausschnitt (37) der zentralen Rippe (15) sowie in einer gegenüberliegenden Auskerbung (35) gehalten ist, welche in den die mittlere Aufnahmekammer (25) zwischen sich eingrenzenden Rippen (21, 22) gebildet ist, wobei der Strahler die mittlere Aufnahmekammer verlängert.

11. Lesekopf nach einem der Ansprüche 9 und 10, dadurch gekennzeichnet, daß die beiden zwischen sich die mittlere Aufnahmekammer (25) eingrenzenden Rippen (21, 22) im Bereich zwischen dem Fenster (11) und der Vorderseite (4) des Gehäuses, was die eine Rippe (21) anbetrifft, auf der Seite der mittleren Aufnahmekammer (25) hochstufig (21h) und auf der Seite der seitlichen Aufnahmekammer (26) niederstufig (21b) in Bezug auf die Höhe der seitlichen Rippen (20, 23) ausgebildet sind, während, was die andere Rippe anbetrifft, das Umgekehrte gilt.

12. Lesekopf nach einem der Ansprüche 9 bis 11, dadurch gekennzeichnet, daß das Fenster mindestens teilweise von den mittleren Rippen (21, 22) gesäumt wird.

13. Lesekopf nach einem der Ansprüche 9 bis 12, dadurch gekennzeichnet, daß die seitlichen Rippen (20, 23) im wesentlichen im Bereich des Fensters (11) unterbrochen sind.

14. Lesekopf nach einem der Ansprüche 1 bis 13, dadurch gekennzeichnet, daß die Schaltung zur Analogverarbeitung (50) im hinteren Abschnitt durch einen Anschlag (75) an der Rückwand des Gehäuses (1) und durch Pressen der Photodetektoren (58, 59) auf die Kupplungsenden der Empfangslichtleiter (28, 29) blockiert gehalten wird.

15. Lesekopf nach einem der Ansprüche 1 bis 14, dadurch gekennzeichnet, daß das Gehäuse aus zwei identischen, über ihre periphere Ränder zusammensetzbaren Gehäusehälften besteht.

**Claims**

1. An optical mark reader for reading marks printed on a document, comprising a light source (57) and two photodetectors (58, 59), spaced away from the document and coupled to three light conduits (27, 28, 29) defining a set of three individual terminal heads (7, 8, 9) arranged side by side in parallel to one another in a detection surface (4) near the document and in small distinct slits of said surface, one of said heads (7), a light emitting head, being bordered by the two other heads which are light receiving heads (8, 9), and further comprising an analog processing circuit board (50) for processing electrical signals output by said photodetectors, characterized in that the source (57), the photodetectors (58, 59), the three light conduits (27, 28, 29) and the analog processing circuit (50) are grouped together and positioned relative to one another in a common flat supporting case (1), said case being internally divided by a ridge (15) passing substantially through the centre thereof, and parallel to two of its small opposite faces, termed front face (4), adapted to constitute said detection surface, and termed back face, into a front section (16) and a back section (17), and that said front section (16) carries the three light conduits constituted by three rigid, preformed, optical conduits (27, 28, 29) individually kept in position by sets of ribs (20, 23) defining between them a central housing cavity (25) and two lateral housing cavities (24, 26) fanning away from one another as of substantially the front face and provided for accommodating said conduits, with said parallel slits being disposed in said front face, substantially crossing the centre portion thereof, and that said back section (17) carries said analog processing circuit board (50), which in turn supports, on the one hand, said photodetectors (58, 59) mounted substantially onto its rim facing said central ridge and positioned in cavities (61, 62) provided in the central ridge (15), into which said lateral cavities open out respectively said lateral housing cavities (24, 26), and, on the other hand, said light source (57) being disposed distant from said same rim of the board and being more or less connected to said circuit through a cutout (37) in said central ridge.

2. A reader head according to claim 1, characterized in that the rigid optical conduit (27) located in the central housing cavity (25), termed emitter conduit, has an end of circular cross-section for coupling with said source, and another end of rectangular cross-section forming the emitter head (7), whose longer rectangular dimension is substantially the same length as the cross-sectional diameter of the coupling end.

3. A reader head according to claim 2, characterized in that the emitter conduit includes a midsection of regularly variable thickness, delimited by two facing side walls (27a, 27b) symmetrically inclined towards its longitudinal centre plane.

4. A reader head according to any one of claims 1 to 3, characterized in that the rigid optical conduits (28, 29) located in the lateral housing cavities (26, 24), termed optical receiver conduits, have an end of either square or rectangular cross-section for coupling with one of said photodetectors, and another end of rectangular cross-section forming said receiver head (8, 9), one of the sides thereof being smaller than the corresponding one on the photodetector coupling end.

5. A reader head according to claim 4, characterized in that the cross-sections of the coupling end and of the receiver head end of the light receiver conduits (28, 29) are substantially equal.

6. A reader according to claim 5, characterized in that the light receiver conduits (28, 29) have substantially constant thickness throughout their length, except at the end forming the receiver head and delimited by an oblique side wall (90), and a smoothly increasing height from the coupling end thereof to the receiver head end thereof.

7. A reader head according to any one of claims 4 through 6, characterized in that the coupling end of each of the light receiver conduits (28, 29) is in direct contact with the light sensitive surface of its photodetector (58, 59).

8. A reader head according to any one of claims 1 through 7, characterized in that the optical receiver conduits (28, 29) are preformed in the shape of a slanted S.

9. A reader head according to any one of claims 1 through 8, characterized in that the light source (57) is located in said front section (16) and is provided in at least one of the broad sides of said case (1) with a window (11) located in front of the source.

10. A reader head according to claim 9, characterized in that the light source (57) is accommodated in a dissipator (12) extending throughout the height of the window (11) transversely to the front face (4) of the case (1) and held in said cutout (37) in the centre ridge (15) and in a facing recess (35) provided in said ribs (21, 22) which delimit a central housing cavity, said dissipator acting as an extension of the central housing cavity.

11. A reader head according to one of claims 9 and 10, characterized in that the two ribs (21, 22) delimiting the central housing cavity (25) amidst them are provided in the area between the window (11) and the front face (4) of said case as regards one (21) of the ribs, and in relation to the height of the lateral ribs (20, 23), with a high level shoulder (21h) aside the central housing cavity (25) and with a low level shoulder (21b) aside the lateral housing cavity (26), with the reverse being true for the other rib.

12. A reader head according to any one of claims 9 to 11, characterized in that the window is at least partly delimited by the central cavity ribs (21, 22).

13. A reader head according to any one of claims 9 through 12, characterized in that the lateral ribs (20, 23) are interrupted over substantially the height of the window (11).

14. A reader head according to any one of claims 1 through 13, characterized in that the analog processing circuit (50) is locked in a place within said back section by a stop (75) provided on the back wall of the case (1) and by the photodetectors (58, 59) pressing against the coupling ends of the optical receiver conduit (28, 29).

15. A reader head according to any one of claims 1 to 14, characterized in that the supporting face consists of two identical half cases assembled by their peripheral edges.

FIG.1

FIG.2

# FIG.3

# FIG.4

FIG.7

FIG.5

FIG.6

FIG.8

# FIG.9

50   10

82

82

58   55   59

57

12

27

28   29

8   7   9

4

FIG.14

FIG.13

FIG.15

FIG.11

FIG.12

FIG.10

## FIG.16